# EUROPÄISCHE PATENTSCHRIFT

(11) **EP 0 384 948 B1**
(45) Veröffentlichungstag und Bekanntmachung des Hinweises auf die Patenterteilung: **27.10.1993**
(21) Anmeldenummer: 89111202.1
(22) Anmeldetag: 19.06.1989
(51) Int. Cl.: F16J 10/02, F15B 15/14

(54) **Zylinder für ein Kolben-Zylinder-Aggregat**
Cylinder for a piston-cylinder-unit
Cylindre pour une unité à piston-cylindre

(30) Priorität: 03.03.1989 DE 3906824
(43) Veröffentlichungstag der Anmeldung: 05.09.1990
(73) Patentinhaber: Festo KG, D-73734 Esslingen (DE)
(72) Erfinder: Stoll, Kurt, Dipl.-Ing., D-7300 Esslingen (DE)
(74) Vertreter: Magenbauer, Rudolf, Dipl.-Ing.

(56) Entgegenhaltungen:
- EP-A- 0 177 880
- DE-A- 2 128 459
- DE-A- 2 918 294
- DE-A- 3 706 952
- PATENT ABSTRACTS OF JAPAN vol. 11, no. 281 (M-624)(2728) 11 September 1987; JP-A-62 080306 (SMC Corp.) 13 April 1987
- PATENT ABSTRACTS OF JAPAN vol. 1, no. 158 (M-77) 15 Dezember 1977; & JP-A-52 103015 (Hitachi Seisakusho) 29 August 1977
- PATENT ABSTRACTS OF JAPAN vol. 12, no. 445 (M-767)(3292) 22 November 1988; & JP-A-63 176874 (Mitsubishi Cable) 21 Juli 1988

## Beschreibung

Die Erfindung betrifft einen Zylinder für ein Kolben-Zylinder-Aggregat, mit einem aus kunststoffhaltigem Material bestehenden rohrförmigen Zylindergehäuse, in das eine Lauföffnung Zur verschiebbaren Aufnahme eines Kolbens eingeformt ist, und dessen Wandung mit mindestens einem im Umfangsbereich der Lauföffnung außerhalb dieser angeordneten Versteifungselement verbunden ist.

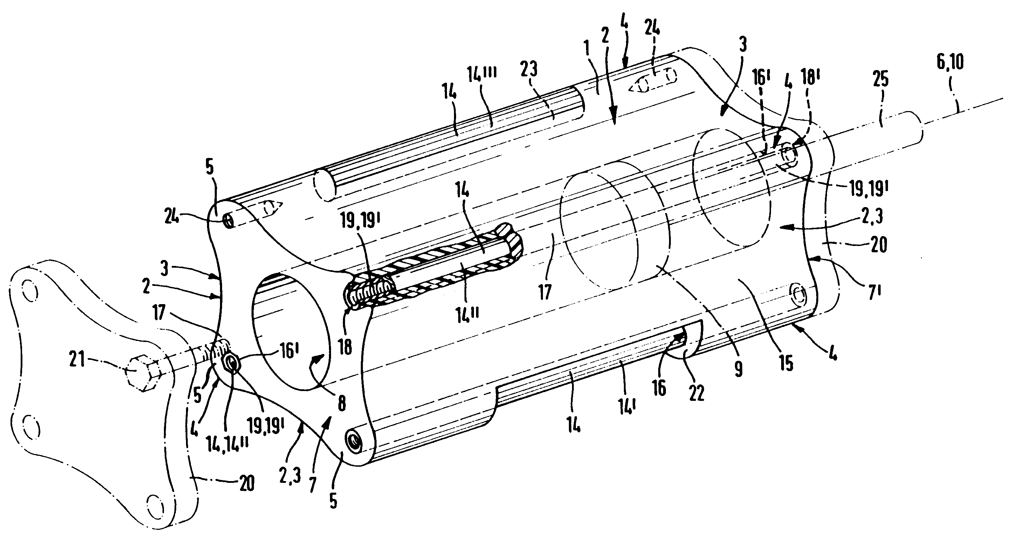

Ein Zylinder dieser Art geht aus der EP-A-0 177 880 hervor. Er besitzt ein als kreisförmiges Rohr ausgebildetes und aus Kunststoffmaterial bestehendes Zylindergehäuse, in dem ein Kolben axial verschiebbar angeordnet ist. Auf dem Außenumfang des Rohres sitzt ein mit diesem fest verbundenes Profilteil , das eine versteifende Wirkung ausüben und deshalb als Versteifungselement bezeichnet werden kann. Zur Gewichtseinsparung ist das Profilteil bei einer besonderen Ausführungsform (Fig. 4) mit einem die Außenkontur vorgebenden Mantel versehen, wobei der Zwischenraum zum rohrförmigen Zylindergehäuse mit Kunststoff ausgeschäumt und/oder mittels Querstegen überbrückt wird.

Durch die Verwendung von Kunststoffmaterial ergibt sich neben einer Reduzierung des Gewichts auch die Möglichkeit einer kostengünstigeren Herstellung, wenn man einen Vergleich zu metallischen Ausführungen zieht. Diesen gegenüber zeichnet sich ein entsprechender Zylinder auch noch durch Korrosionsfestigkeit, isolierende Wirkung und Einsatzmöglichkeiten in Bereichen mit hohen Hygieneanforderungen aus.

Allerdings ist der Aufbau des aus der EP-A-0 177 880 bekannten Zylinders noch immer relativ aufwendig, was sich als nachteilig für die Herstellung erweist. Problematisch ist vor allem die lagegenaue Justierung des rohrförmigen Zylindergehäuses im Innern des Profilteiles, zumal wenn dieses den geschilderten Mehrschichtaufbau besitzt und eine Ausrichtung in Bezug zu dem die Außenkontur vorgebenden Mantel vorgenommen werden muß. Darüberhinaus ist die versteifende Wirkung des Schaummaterials nicht besonders ausgeprägt. Auch eventuell vorhandene Querstege sind nicht in der Lage, sich wesentlich auf die Steifigkeit des Zylindergehäuses auszuwirken, zumal wenn dieses eine relativ große Länge aufweist. Der Alternativvorschlag, das Profilteil aus einem Stück aus Metall herzustellen, hat neben der damit verbundenen Gewichtserhöhung vor allem höhere Materialkosten zur Folge, und man könnte sich in diesem Falle das lediglich einen Einsatz darstellende Zylinderrohr eigentlich ersparen.

Es ist daher die Aufgabe der vorliegenden Erfindung, einen Zylinder gemäß der eingangs genannten Art zu schaffen, der trotz geringen Gewichtes, einfachen Aufbaus und kostengünstiger Herstellbarkeit eine hohe Steifigkeit aufweist.

Diese Aufgabe wird erfindungsgemäß dadurch gelöst, daß das Versteifungselement als Versteifungsstab oder -stange ausgebildet ist, der bzw. die sich parallel zur Längsrichtung der Lauföffnung entlang dieser erstreckt und in einer Ausnehmung der Wandung des Zylindergehäuses gehalten ist.

Auf diese Weise liegt ein aus kunststoffhaltigem Material bestehendes Zylindergehäuse vor, wobei durch die Anordnung mindestens eines stab- oder stangenförmigen Versteifungselementes innerhalb seiner Wandung eine Versteifung und eine beträchtliche Erhöhung der Festigkeit erzielt wird. Infolge der Parallellage von Versteifungselement und Lauföffnung erfährt das Zylindergehäuse eine optimale Abstützung und Versteifung. Dem Zylindergehäuse stehen praktisch ohne Einschränkung alle Anwendungsbereiche offen, in denen bisher metallene Zylindergehäuse verwendet wurden. Bei all diesen Vorteilen ist das Zylindergehäuse kostengünstig herstellbar.

In der DE-A-29 18 294 wird zwar ein Zylinder beschrieben, der ein Zylindergehäuse mit in Längsrichtung verlaufenden Ausnehmungen aufweist. Diese dienen allerdings als Pneumatikkanäle oder zur Aufnahme von Verbindungsteilen, über die Zusatzbauteile am Zylindergehäuse befestigt werden können. Versteifende Maßnahmen sind mit ihnen nicht verbunden.

Zweckmäßige Weiterbildungen der Erfindung sind in den Unteransprüchen aufgeführt.

Vorzugsweise besteht das Zylindergehäuse insgesamt aus Kunststoff, wobei zweckmäßigerweise ein Polyacetal-Kunststoff oder ein Polyamid-Kunststoff verwendet wird. Die Gestehungskosten werden dadurch um ein weiteres verringert, zumal wenn das Zylindergehäuse im Rahmen eines Strangpreßverfahrens bzw. Extrudierverfahrens hergestellt wird und ein Strangpreßteil darstellt. Hier ist es möglich, Zylindergehäuse in Meterware herzustellen, die im Anschluß an das Extrudieren auf das gewünschte Längenmaß zugeschnitten werden. Vorteilhaft ist es auf jeden Fall, wenn das Zylindergehäuse von einem einstückigen Bauteil gebildet ist.

Bei einer Weiterbildung der Erfindung ist vorgesehen, daß eine ein Versteifungselement aufnehmende Ausnehmung umfangsseitig aufgebrochen ist, so daß das Versteifungselement umfangsseitig lediglich teilweise von Abschnitten der Wandung des Zylindergehäuses umgeben ist. Alternativ hierzu wäre es aber auch möglich, ein Versteifungselement so in der Wandung des Zylindergehäuses unterzubringen, daß es zumindest umfangsseitig vollständig eingeschlossen ist.

Bevorzugt sind die Versteifungselemente drehfest in der zugeordneten Ausnehmung festgelegt, wozu sie zweckmäßigerweise in letztere fest eingepreßt sind und/oder ein unkreisförmiges Außenprofil aufweisen und somit als Profilstab bzw. Profilstange ausgebildet sind. Vorteilhaft sind diese Maßnahmen vor allem dann, wenn das Versteifungselement an mindestens einer und vorzugsweise an beiden seiner einander entgegengesetzten axialen Stirnseiten frei zugänglich ist und dort Befestigungseinrichtungen aufweist, über die sich Zylinderdeckel festlegen lassen.

Wenn eine Ausnehmung die Wandung des Zylindergehäuses in Längsrichtung vollständig durchzieht, ist eine besonders einfache Herstellung möglich. Die Ausnehmung läßt sich beispielsweise beim Strangpressen unmittelbar mit einformen.

Besonders hohe Festigkeitswerte werden erzielt, wenn die Versteifungselemente aus Metall wie Stahl oder Aluminium bestehen. In diesem Falle ergeben sich vorteilhafterweise auch für die Zylinderdeckel-Befestigungseinrichtungen hohe Festigkeitswerte, so daß der Zylinder mit hohen Innendrücken beaufschlagbar ist.

Als besonders zweckmäßig hat es sich erwiesen, mehrere Versteifungselemente entlang des Umfanges der Lauföffnung insbesondere gleichmäßig verteilt anzuordnen. Auch ist es von Vorteil, wenn sich die Versteifungselemente zumindest annähernd über die gesamte Länge des Zylindergehäuses erstrecken.

Die Erfindung soll nachfolgend anhand der beigefügten Zeichnung näher erläutert werden, deren einzige Figur ein Zylindergehäuse offenbart, bei dem verschiedene Versteifungsmöglichkeiten realisiert sind. Es versteht sich jedoch, daß in der Praxis zweckmäßigerweise pro Zylindergehäuse nur jeweils eine Ausführungsform und Befestigungsart von Versteifungselementen vorgesehen ist.

In der Zeichnungsfigur ist in durchgezogenen Linien schematisch das in der Regel als Zylinderrohr bezeichnete rohrförmige Zylindergehäuse 1 eines Zylinders eines insbesondere pneumatischen Kolben-Zylinder-Aggregates abgebildet. Es handelt sich bei ihm um ein sich linear erstreckendes Bauteil, mit einer in etwa quaderförmigen Grundstruktur. An seinen sich hierbei ergebenden außenumfangsseitigen vier Flächenabschnitten 2 ist es mit konkaven, sich über die gesamte Gehäuselänge erstreckenden Einbuchtungen 3 versehen, und die vier Längskanten 4 sind abgerundet. Im Querschnitt gesehen ist das Zylindergehäuse 1 deshalb mit vier über den Umfang gleichmäßig verteilten und in den Eckenbereichen eines Rechteckes und insbesondere eines Quadrates angeordneten Vorsprüngen 5 versehen, die sich in Längsrichtung 6 des Zylindergehäuses erstrecken, wobei zwischen in Umfangsrichtung benachbarten Vorsprüngen 5 jeweils eine der Einbuchtungen 3 zu liegen kommt.

Im Zylindergehäuse 1 befindet sich eine zweckmäßigerweise von Gehäusestirnseite 7 zu Gehäusestirnseite 7′ durchgehende Lauföffnung 8 von vorzugsweise kreisförmigem Querschnitt, in der, wie dies gestrichelt angedeutet ist, ein Kolben 9 in Öffnungs-Längsrichtung 10 verschiebbar anordenbar ist. Beim Ausführungsbeispiel fallen die beiden Längsrichtungen 6,10 vorzugsweise zusammen.

Die Lauföffnung 8 kann auch einen von der Kreisform abweichenden Querschnitt haben, wie auch die Außenkontur des Zylindergehäuses 1 in anderer Weise geformt sein kann. Das abgebildete Ausführungsbeispiel ist jedoch hinsichtlich Festigkeit und erforderlichem geringem Werkstoffaufwand besonders günstig.

Um einen Zylinder mit geringem Gewicht zu erhalten, der gleichzeitig extrem korrosionsfest ist, besteht das Zylindergehäuse 1 aus kunststoffhaltigem Material. Hierbei kann es sich beispielsweise um glasfaserverstärkten Kunststoff handeln. Besonders vorteilhaft ist es aber, wenn das Zylindergehäuse 1 insgesamt aus Kunststoff besteht, mithin ein Kunststoffgehäuse ist, wobei es sich bei diesem Kunststoff vorzugsweise um einen Polyacetal- oder einen Polyamid-Kunststoff oder aber um einen polyacetalhaltigen oder einen polyamidhaltigen Kunststoff handelt. Vor allem die Kunststoffausführung ermöglicht es, das Zylindergehäuse im Rahmen eines Strangpreßverfahrens, d. h. eines Extrudierverfahrens, herzustellen, so daß man es als Strangpreßteil bezeichnen kann. Hierbei ist es möglich, Rohrkörper beliebiger Länge einstückig zu formen, die man anschließend auf das gewünschte Längenmaß einzelner Zylindergehäuse ablängt. Bei der Strangpreßherstellung wird zweckmäßigerweise auch gleichzeitig die Lauföffnung 8 miteingeformt, die demzufolge, wie abgebildet, an den beiden einander entgegengesetzten Stirnseiten 7,7′ des Zylindergehäuses 1 ausmündet und eine Durchgangsöffnung ist.

Die Kunststoffausführung hat auch den Vorteil, daß das Zylindergehäuse als elektrischer Isolator wirkt und daß Kunststoffe verwendet werden können, die dem jeweiligen Anwendungsgebiet Rechnung tragen. So lassen sich beispielsweise sogenannte "lebensmittelechte" Kunststoffe verwenden, was es ermöglicht, das Zylindergehäuse auch bei Anwendungsfällen in der Nahrungsmittelindustrie einzusetzen.

Um trotz Kunststoffausführung eine hohe Gehäusefestigkeit zu erzielen, ist beim erfindungsgemäßen Zylindergehäuse 1 vorgesehen, daß zu seiner Versteifung und dadurch erfolgender Festigkeitserhöhung Versteifungselemente 14 vorhanden sind, die mit der Zylindergehäuse-Wandung 15 diese stabilisierend verbunden sind. Sie befinden sich im Bereich des Umfanges der Lauföffnung 8 außerhalb dieser.

In der einzigen Zeichnungs-Figur ist ein Zylindergehäuse 1 dargestellt, bei dem gleichzeitig drei verschiedene Arten von Versteifungselementen 14′,14˝,14‴ verwendet werden, die auf verschiedene Art und Weise an und/oder in der Gehäusewandung 15 angebracht sind. In der Praxis wird man jedoch regelmäßig nur jeweils einen Typ von Versteifungselement und zugehöriger Anbringungsweise pro Zylindergehäuse 1 vorsehen.

Die beiden Versteifungselemente 14′,14˝ sind stab- oder stangenförmig ausgebildet und haben eine lineare Erstreckung, die zweckmäßigerweise zumindest annähernd der Längserstreckung des Zylindergehäuses 1 entspricht. Vorzugsweise sind das Zylindergehäuse 1 und die Versteifungselemente 14′,14˝ gleich lang. Jedes der Versteifungselemente 14', 14˝ ist derart mit dem Zylindergehäuse 1 verbunden, daß es sich neben der Lauföffnung 8 entlang dieser erstreckt und parallel zu ihr ausgerichtet ist. Die Versteifungselemente 14′,14˝ befinden sich in den Gehäusevorsprüngen 5, die hierzu prädestiniert sind.

Zu diesem Zweck ist im jeweiligen Vorsprung 5 eine durchgehende, an den beiden Gehäusestirnseiten 7,7′ ausmündende Ausnehmung 16,16′ vorgesehen, in die jeweils eines der Versteifungselemente 14′,14˝ eingesetzt ist. Die Ausnehmungen 16,16′ lassen sich beim Extrudieren des Zylindergehäuses 1 vorteilhafterweise unmittelbar in Gestalt von Durchgangsöffnungen einformen.

Die Versteifungselemente 14′,14˝ sind in der jeweils zugeordneten Ausnehmung 16,16′ zweckmäßigerweise in Axialrichtung unbewegbar fixiert, außerdem ist es, aus noch zu erläuternden Gründen, vorteilhaft, wenn die Versteifungselemente drehfest in der jeweiligen Ausnehmung festgelegt sind. Am besten läßt sich eine derartige Fixierung dadurch erreichen, daß man die Versteifungselemente als Einsteckteile ausbildet und in die jeweilige Ausnehmung fest einpreßt.

Es ist möglich, die einzelnen Versteifungselemente 14 als Profilstäbe auszubilden und das Profil bzw. die Anordnung des Profilstabes gegenüber dem Zylindergehäuse 1 so vorzunehmen, daß quer zur Gehäuse-Längsrichtung 6 eine hohe Biegesteifigkeit erzielt wird.

Die beiden beim Ausführungsbeispiel mit dem Bezugszeichen 14˝ versehenen stabförmigen Versteifungselemente sind umfangsseitig, d.h im Bereich ihrer äußeren Mantelfläche, vollständig von Partien 17 der Gehäusewandung 15 umgeben und eingeschlossen, während ihre einander entgegengesetzten Elemente-Stirnseiten 18,18′ gehäusewandungsfrei sind, d.h. von Partien der Gehäusewandung 15 nicht abgedeckt und von den Gehäusestirnseiten 7,7′ her zugänglich sind. Da die Innenkontur der jeweils zugeordneten Ausnehmung 16′ komplementär zur Außenkontur des jeweils eingesetzten Versteifungselementes 14˝ ausgebildet ist, ergibt sich hierbei eine großflächige, quer zur Gehäuse-Längsrichtung 6 äußerst wirksame Querversteifung des Gehäuses.

Das eine der beiden Versteifungselemente 14˝ hat die Außenkontur eines Rundstabes, während das andere der beiden abgebildeten Versteifungselemente 14˝ außen eine Mehreckkontur hat. Letzteres gewährleistet mit wenig Aufwand eine optimale Verdrehsicherung des Versteifungselementes gegenüber dem Zylindergehäuse 1.

Diese Verdrehsicherung ist bei den Versteifungselementen 14˝ wichtig, da an ihren beiden stirnseitigen Endpartien Befestigungseinrichtungen 19 angeordnet sind, die zur festen Anbringung von gestrichelt angedeuteten Zylinderdeckeln 20 dienen können. Bei den Befestigungseinrichtungen 19 handelt es sich zweckmäßigerweise um in stirnseitige Ausnehmungen der Versteifungselemente 14˝ eingebrachte Innengewinde 19′.

Es lassen sich jetzt Zylinderdeckel 20 an den Stirnseiten 7,7′ des Zylindergehäuses 1 anordnen und mittels mit den Befestigungseinrichtungen 19 zusammenarbeitenden, insbesondere als Schrauben ausgebildeten Befestigungselementen 21 am Zylindergehäuse 1 festlegen. Da die Versteifungselemente 14 zumindest im Bereich ihrer Befestigungseinrichtungen 19 und vorzugsweise insgesamt aus einem Material bestehen, das eine höhere Festigkeit als der Zylindergehäuse-Werkstoff aufweist, können die Zylinderdeckel 20 dauerhaft lösbar gehäusefest angebracht werden. Auch mehrmaliges Abnehmen der Zylinderdeckel, z.B. zu Montagezwecken, beeinträchtigt die Qualität der Befestigungseinrichtungen nicht. Von Vorteil ist es, wenn die Versteifungselemente 14, wie beim Ausführungsbeispiel, aus Metall bestehen und z.B. aus Stahl oder einer Aluminiumlegierung od.dgl. hergestellt sind.

Trotz Kunststoffgehäuse läßt sich demnach die Lauföffnung 8 stirnseitig zuverlässig abdichten, so daß der Zylinder auch für Hochdruckeinsätze geeignet ist, bei denen in der Lauföffnung 8 Drücke von beispielsweise 10 Bar auftreten.

Die beiden mit Befestigungseinrichtungen 19,19′ versehenen Versteifungselemente 14˝ sind beim Ausführungsbeispiel innen in Axialrichtung durchgehend hohl, so daß es sich um rohrförmige Versteifungselemente handelt. Eine derartige Ausführungsform führt zu einer Gewichtsreduzierung und erleichtert außerdem das Einbringen der Befestigungseinrichtungen 19, vor allem wenn es sich bei ihnen um Innengewinde 19′ handelt. Die somit erhaltenen stabförmigen Versteifungsrohre können sogar mit einem durchgehenden Innengewinde ausgestattet sein.

Wie anhand des Versteifungselementes 14′ verdeutlicht, ist es auch möglich, die Anordnung so zu treffen, daß die Versteifungselemente lediglich teilweise von Abschnitten bzw. Bereichen oder Partien der Zylindergehäusewandung 15 umgeben sind. In diesem Falle ist nämlich die zugeordnete Ausnehmung 16 an mindestens einer Stelle ihrer Länge zur Außenseite des Zylindergehäuses 1 hin aufgebrochen, und ein entsprechendes Fenster ist bei 22 angedeutet. Dieses kann nach dem Formen des Zylindergehäuses eingebracht werden, indem der Vorsprung 5 an entsprechender Stelle mit einem Einschnitt versehen wird. Das Versteifungselement 14′ ist außerdem in Gestalt eines aus Vollmaterial bestehenden Stabkörpers insbesondere als Rundstab ausgebildet.

Während, wie bereits oben erwähnt, die Versteifungselemente 14′,14˝ sich über die gesamte Gehäuselänge erstrecken, ist die Länge des Versteifungselementes 14‴ geringer. Es hat allerdings vorzugsweise ebenfalls die Gestalt eines länglichen Stabes. Es sitzt beim Ausführungsbeispiel in einer in den zugehörigen Vorsprung 5 eingeformten, nach außen hin offenen Tasche 23 ein, in die es eingelegt und zweckmäßigerweise eingepreßt ist.

Wenn Versteifungselemente 14 verwendet werden, die stirnseitig keine Befestigungseinrichtungen 19 aufweisen, wie dies bei den Versteifungselementen 14′,14‴ der Fall ist, werden erforderliche Zylinderdeckel beispielsweise durch Ankleben, Anschweißen oder Einsetzen in die Lauföffnung 8 festgelegt. Es ist auch möglich, von den Stirnseiten 7,7′ her unmittelbar in die Zylinderwandung 15 Gewindebohrungen einzubringen, wie sie bei 24 angedeutet sind. Zur Erhöhung der Festigkeit empfiehlt es sich hier aber, zusätzliche Gewindeeinsätze aus Metall vorzusehen.

Es empfiehlt sich, pro Zylindergehäuse 1 jeweils mehrere Versteifungselemente vorzusehen, die über den Umfang der Lauföffnung 8 insbesondere gleichmäßig verteilt in bzw. an der Gehäusewandung 15 angeordnet sind. Dies ist beim Ausführungsbeispiel der Fall, allerdings ist zu berücksichtigen, daß im Regelfall alle pro Zylindergehäuse 1 jeweils vorhandenen Versteifungselemente 14 identisch sind und auch auf identische Weise mit der Wandung 15 in Verbindung stehen.

Als zweckmäßig hat es sich erwiesen, vier Stück von Versteifungselementen 14 über den Umfang des Zylindergehäuses 1 verteilt anzuordnen. Sie sind dann jeweils zweckmäßigerweise einem der gegebenenfalls vorhandenen Vorsprünge 5 zugeordnet und befinden sich demzufolge, bei einer Ansicht des Zylindergehäuses 1 in Längsrichtung, in den vier Eckenbereichen eines Rechteckes oder Quadrates. Bei einer bevorzugten Ausführungsform ist das Zylindergehäuse 1 mit mehreren, insbesondere vier an beiden Stirnseiten ausmündenden Ausnehmungen versehen, in denen jeweils ein stabförmiges Versteifungselement 14 einsitzt.

Es versteht sich, daß die oben anhand der verschiedenen Ausführungsformen von Versteifungselementen beschriebenen Gestaltungs- und Anordnungsvarianten untereinander beliebig ausgetauscht werden können.

Bei 25 ist gestrichelt noch eine mit dem Kolben 9 verbundene Kolbenstange angedeutet, die sich in Axialrichtung erstreckt und einen der bei zusammengebautem Zylinder eventuell vorhandenen Zylinderdeckel 20 unter Abdichtung nach außen hin durchdringt.

## Patentansprüche

1. Zylinder für ein Kolben-Zylinder-Aggregat, mit einem aus kunststoffhaltigem Material bestehenden rohrförmigen Zylindergehäuse (1), in das eine Lauföffnung (8) zur verschiebbaren Aufnahme eines Kolbens (9) eingeformt ist, und dessen Wandung (15) mit mindestens einem im Umfangsbereich der Lauföffnung (8) außerhalb dieser angeordneten Versteifungselement (14) verbunden ist, dadurch gekennzeichnet, daß das Versteifungselement (14) als Versteifungsstab oder -stange ausgebildet ist, der bzw. die sich parallel zur Längsrichtung (10) der Lauföffnung (8) entlang dieser erstreckt und in einer Ausnehmung (16,16') der Wandung (15) des Zylindergehäuses (1) gehalten ist.

2. Zylinder nach Anspruch 1, dadurch gekennzeichnet, daß das Zylindergehäuse (1) aus Kunststoff besteht, bei dem es sich zweckmäßigerweise um Polyacetal-Kunststoff oder Polyamid-Kunststoff handelt.

3. Zylinder nach Anspruch 1 oder 2, dadurch gekennzeichnet, daß das Zylindergehäuse (1) einstückig und insbesondere als Strangpreßteil ausgebildet ist.

4. Zylinder nach einem der Ansprüche 1 bis 3, dadurch gekennzeichnet, daß die das Versteifungselement (14,14') aufnehmende Ausnehmung (16) umfangsseitig aufgebrochen ist, derart, daß das Versteifungselement (14,14') umfangsseitig lediglich teilweise von Abschnitten der Wandung (15) des Zylindergehäuses (1) umgeben ist.

5. Zylinder nach einem der Ansprüche 1 bis 3, dadurch gekennzeichnet, daß das Versteifungselement (14,14'') umfangsseitig vollständig von Abschnitten der Wandung (15) des Zylindergehäuses (1) umgeben ist.

6. Zylinder nach einem der Ansprüche 1 bis 5, dadurch gekennzeichnet, daß das Versteifungselement (14) drehfest in der Wandung (15) des Zylinders (1) festgelegt ist.

7. Zylinder nach Anspruch 6, dadurch gekennzeichnet, daß das Versteifungselement (14) in die zugehörige Ausnehmung (16) fest eingepreßt ist.

8. Zylinder nach Anspruch 6 oder 7, dadurch gekennzeichnet, daß das Versteifungselement (14,14'') als Profilstab bzw. Profilstange ausgebildet ist.

9. Zylinder nach einem der Ansprüche 1 bis 8, dadurch gekennzeichnet, daß das Versteifungselement (14,14',14'') an mindestens einer und vorzugsweise an beiden seiner einander entgegengesetzten axialen Stirnseiten (18,18') gehäusewandungsfrei und von den Stirnseiten (7,7') des Zylindergehäuses (1) her zugänglich ist.

10. Zylinder nach Anspruch 9, dadurch gekennzeichnet, daß an den Stirnseiten (18,18') der Versteifungselemente (14,14', 14'') Befestigungseinrichtungen (19) zweckmäßigerweise in Gestalt von insbesondere als Innengewinde ausgebildeten Gewindepartien (19') angeordnet sind, mit denen zur Anbringung von Zylinderdeckeln (20) dienende Befestigungselemente (21) verbindbar sind.

11. Zylinder nach einem der Ansprüche 1 bis 10, dadurch gekennzeichnet, daß das Versteifungselement (14) durchgehend hohl ausgebildet ist und ein Versteifungsrohr bildet.

12. Zylinder nach einem der Ansprüche 1 bis 11, dadurch gekennzeichnet, daß die Ausnehmung (16,16') als die Wandung (15) in Längsrichtung (10) des Zylindergehäuses (1) vollständig durchziehende, bei als Strangpreßteil ausgebildetem Zylindergehäuse (1) beim Strangpressen unmittelbar mit eingeformte Durchgangsöffnung ausgebildet ist.

13. Zylinder nach einem der Ansprüche 1 bis 12, dadurch gekennzeichnet, daß die Versteifungselemente (14) aus Metall bestehen, beispielsweise aus Stahl oder aluminiumhaltigem Metall.

14. Zylinder nach einem der Ansprüche 1 bis 13, dadurch gekennzeichnet, daß sich die Versteifungselemente (14,14', 14'') über zumindest annähernd die gesamte Länge des Zylindergehäuses (1) erstrecken.

15. Zylinder nach einem der Ansprüche 1 bis 14, dadurch gekennzeichnet, daß mehrere Versteifungselemente (14) über den Umfang der Lauföffnung (8) insbesondere gleichmäßig verteilt in der Wandung (15) des Zylindergehäuses (1) angeordnet sind.

16. Zylinder nach einem der Ansprüche 1 bis 15, dadurch gekennzeichnet, daß in der Wandung (15) vier über den Umfang der Lauföffnung (8) gleichmäßig verteilte Versteifungselemente (14) angeordnet sind, die stirnseitig von den Stirnseiten (7,7') des Zylindergehäuses (1) her zugängliche, als Innengewinde ausgebildete Gewindepartien (19') zum Anschrauben von Zylinderdeckeln (20) aufweisen, und die zweckmäßigerweise in Gehäusevorsprüngen (5) des Zylindergehäuses (1) untergebracht sind, zwischen denen sich GehäuseEinbuchtungen (3) befinden.

## Claims

1. Cylinder for a piston-cylinder assembly, with a tubular cylinder housing (1) made of material containing plastic, in which is formed a barrel bore (8) for sliding accommodation of a piston (9), with a wall (15) connected to one or more reinforcing elements (14) located In the peripheral area of the barrel bore (8) and outside the latter, characterized in that the reinforcing element (14) is designed as a reinforcing bar or rod, extending parallel to the longitudinal direction (10) of the barrel bore (8) and alongside the latter, and mounted in a recess (16, 16') in the wall (15) of the cylinder housing (1).

2. Cylinder according to claim 1, characterized in that the cylinder housing (1) is made of plastic, expediently of polyacetal or polyamide.

3. Cylinder according to claims 1 or 2, characterized in that the cylinder housing (1) is in one piece and in particular is an extruded part.

4. Cylinder according to any of claims 1 to 3, characterized in that the recess (16) accommodating the reinforcing element (14, 14') is open on the peripheral side so that the reinforcing element (14, 14') is only partly surrounded by sections of the wall (15) of the cylinder housing (1) on the peripheral side.

5. Cylinder according to any of claims 1 to 3, characterized in that the reinforcing element (14, 14'') is completely surrounded on the peripheral side by sections of the wall (15) of the cylinder housing (1).

6. Cylinder according to any of claims 1 to 5, characterized in that the reinforcing element (14) is non-rotatably fixed in the wall (15) of the cylinder (1).

7. Cylinder according to claim 6, characterized in that the reinforcing element (14) is securely pressed into place in the associated recess (16).

8. Cylinder according to claims 6 or 7, characterized in that the reinforcing element (14, 14') is in the form of a profiled rod or profiled bar.

9. Cylinder according to any of claims 1 to 8, characterized in that the reinforcing element (14, 14', 14'') is free of the housing wall on at least one and preferably on both of its opposite axial ends (18, 18') and is accessible from the ends (7, 7') of the cylinder housing (1).

10. Cylinder according to claim 9, characterized in that, located at the ends (18, 18') of the reinforcing elements (14, 14', l4'') are fastening facilities (19) expediently in the form of threaded sections (19') in particular designed with internal thread, by which fastening elements (21) for the purpose of attaching cylinder covers (20) can be connected.

11. Cylinder according to any of claims 1 to 10, characterized in that the reinforcing element (14) is hollow throughout and forms a reinforcing tube.

12. Cylinder according to any of claims 1 to 11, characterized in that the recess (16, 16') is designed as a through hole, passing completely through the wall (15) in the longitudinal direction (10) of the cylinder housing (1), directly formed during extrusion of a cylinder housing (1) designed as an extruded part.

13. Cylinder according to any of claims 1 to 12, characterized in that the reinforcing elements (14) are made of metal, for example steel or metal containing aluminium.

14. Cylinder according to any of claims 1 to 13, characterized in that the reinforcing elements (14, 14', 14'') extend at least approximately over the entire length of the cylinder housing (1).

15. Cylinder according to any of claims 1 to 14, characterized in that several reinforcing elements (14) are arranged over the circumference of the barrel bore (8) in particular distributed evenly in the wall (15) of the cylinder housing (1).

16. Cylinder according to any of claims 1 to 15, characterized In that, arranged in the wall (15) are four reinforcing elements (14) evenly distributed over the circumference of the barrel bore (8), accessible at the ends from the ends (7, 7') of the cylinder housing (1), with threaded sections (19) designed with internal thread for the screwing-on of cylinder covers (20), which are expediently accommodated in housing projections (5) of the cylinder housing (1), between which are located housing indentations (3).

## Revendications

1. Cylindre pour ensemble cylindre-piston, pourvu d'un corps de cylindre (1) tubulaire en matériau contenant une matière synthétique, dans lequel est formé un alésage (8), qui reçoit un piston (9) qui y coulisse, et dont la paroi (15) est liée à au moins un élément de renfort (14) situé dans la zone circonférentielle de l'alésage (8), mais hors de cette dernière, caractérisé en ce que l'élément de renfort (14) est conformé en barre ou en tige de renfort s'étendant parallèlement à la direction longitudinale (10) de l'alésage (8), le long de celui-ci, et étant maintenue dans un évidement (16, 16') de la paroi (15) du corps de cylindre (1).

2. Cylindre selon la revendication 1, caractérisé en ce que le corps de cylindre (1) est constitué en matière synthétique et, avantageusement, en polyacétal ou en polyamide.

3. Cylindre selon la revendication 1 ou 2, caractérisé en ce que le corps de cylindre (1) est monobloc et est conformé, en particulier, en pièce extrudée.

4. Cylindre selon l'une des revendications 1 à 3, caractérisé en ce que l'évidement (16) logeant l'élément de renfort (14, 14') est interrompu sur sa circonférence de telle sorte que l'élément de renfort (14, 14') n'est entouré, sur la circonférence, que partiellement par des parties de paroi (15) du corps de cylindre (1).

5. Cylindre selon l'une des revendications 1 à 3, caractérisé en ce que l'élément de renfort (14, 14'') est totalement entouré, sur la circonférence, par des parties de paroi (15) du corps de cylindre.

6. Cylindre selon l'une des revendications 1 à 5, caractérisé en ce que l'élément de renfort (14) est monté non tournant dans la paroi (15) du cylindre (1).

7. Cylindre selon la revendication 6, caractérisé en ce que l'élément de renfort (14) est enfoncé de façon inamovible dans l'évidement (16) correspondant.

8. Cylindre selon la revendication 6 ou 7, caractérisé en ce que l'élément de renfort (14, 14'') est conformé en barre profilée ou en tige profilée.

9. Cylindre selon l'une des revendications 1 à 8, caractérisé en ce que l'élément de renfort (14, 14', 14'') n'est pas recouvert par les parois du corps sur au moins une et, de préférence, sur ses deux faces frontales (18, 18') axiales et opposées l'une à l'autre, et est accessible par les faces frontales (7, 7') du corps de cylindre (1).

10. Cylindre selon la revendication 9, caractérisé en ce que, sur les faces frontales (18, 18') des éléments de renfort (14, 14', 14''), sont disposés des moyens de fixation (19), se présentant avantageusement sous la forme de parties filetées (19'), conformées en particulier en filet intérieur, auxquels peuvent être reliés des éléments de fixation (21) servant au montage des couvercles de cylindre (20).

11. Cylindre selon l'une des revendications 1 à 10, caractérisé en ce que l'élément de renfort (14) possède une conformation creuse de part en part et constitue un tube de renfort.

12. Cylindre selon l'une des revendications 1 à 11, caractérisé en ce que l'évidement (16, 16') est conformé en passage traversant entièrement la paroi (15) dans la direction longitudinale (10) du corps de cylindre (1), formé directement lors de l'extrusion, au cas où le corps de cylindre (1) est conformé en pièce extrudée.

13. Cylindre selon l'une des revendications 1 à 12, caractérisé en ce que les éléments de renfort (14) sont métalliques, par exemple en acier ou en métal contenant de l'aluminium.

14. Cylindre selon l'une des revendications 1 à 13, caractérisé en ce que les éléments de renfort (14, 14', 14'') s'étendent sur au moins approximativement toute la longueur du corps de cylindre (1).

15. Cylindre selon l'une des revendications 1 à 14, caractérisé en ce que plusieurs éléments de renfort (14) sont répartis, en particulier de façon régulière, sur le pourtour de l'alésage (8), dans la paroi (15) du corps de cylindre (1).

16. Cylindre selon l'une des revendications 1 à 15, caractérisé en ce que quatre éléments de renfort (14) sont disposés dans la paroi (15), répartis régulièrement sur le pourtour de l'alésage (8), et présentent, sur la face frontale et de façon accessible à partir des faces frontales (7, 7') du corps de cylindre (1), des parties filetées (19') conformées en filet intérieur destinées au vissage des couvercles de cylindre (20), qui sont avantageusement logées dans des parties en saillie (5) du corps de cylindre (1) et entre lesquelles se trouvent des parties incurvées (3).
